# EUROPEAN PATENT SPECIFICATION

(11) **EP 0 547 235 B1**
(45) Date of publication and mention of the grant of the patent: **28.02.1996**
(21) Application number: 92914094.5
(22) Date of filing: 03.07.1992
(51) Int. Cl.: B23H 7/04

(54) **WIRECUT ELECTRIC DISCHARGE MACHINING SYSTEM**
DRAHTSCHNEIDEFUNKENEROSIONSMASCHINE
SYSTEME D'USINAGE PAR DECHARGE ELECTRIQUE AVEC DECOUPAGE PAR FIL

(30) Priority: 05.07.1991 JP 165915/91
(43) Date of publication of application: 23.06.1993
(73) Proprietor: SODICK CO., LTD., Yokohama-shi, Kanagawa 222 (JP)
(72) Inventor: KANEKO, Yuji, Japax Inc., Nagatsuda Technical Ctr., Yokohama-shi, Kanagawa 227 (JP); Nishimura, Hideo, Japax Inc., Nagatsuda Tech. Ctr., Yokohama-shi, Kanagawa 227 (JP)
(74) Representative: Kensett, John Hinton
(86) International application number: PCT/JP92/00844
(87) International publication number: WO 93/01017

(56) References cited:
- JP-A- 3 086 427
- JP-A-60 029 230

## Description

This invention relates to a wire cut electrical-discharge machining apparatus comprising a spark-status detector detecting the biased state of spark-generation positions for preventing the wire electrode from breaking, and to a wire cut electrical-discharge machining apparatus comprising a device discriminating the foreseeing condition of a concentration of spark discharges according to the condition of formation of detecting signals of said biased state, and a device measuring the breaking limit of the wire electrode according to the condition of formation of detecting signals of said spark concentration.

Wire cut electrical-discharge machining apparatus uses a thin wire of about 0.05 mm to 0.35 mm in diameter as an electrode tool, between a pair of positioning guide members wherein it can be displaced on a renewing feed basis in the axial direction by applying a predetermined tension to said thin wire electrode, and opposing the workpiece to be machined from a direction at right angles to the axis of the wire electrode spaced by a very small gap. Machining is done by intermittently generating spark discharges by voltage pulses applied across the wire electrode and the workpiece across a working fluid in the opposed gap. A relative machining feed is given in the opposed direction as machining progresses. Machining is interrupted as a result of wire electrode breakage.

The most recent type of apparatus comprises a self-recovery means for wire electrode breaking which automatically joints the wire electrode. Such automatic insertion and tying is not automatically and always reliably done, even if done in good condition, and not only wastes time, but also generally impairs the machining accuracy and the like. It is preferable to avoid causing wire breakage. However, with this type of wire cut electrical-discharge machining, there are problems: to carry out machining with accuracy or high performance or efficiency at higher speeds is difficult unless working conditions, in particular electrical conditions, for example, pulse width and pause-duration of voltage pulse, and amplitude of the discharge current and machining feed control must be established and controlled so that machining is done under the excessively loaded hard conditions having a higher risk of wire breakage, and moreover, to carry out precision machining by highly tensioning and setting the working conditions is disabled without running the risk of wire breakage.

There are various causes of wire electrode breakage which may be avoidable with the help of detection, of, for example, sparking conditions. By varyingly controlling the working conditions into light-loaded conditions, there is a concentration of sparking positions partially distributed in a certain part of the spark gap. Wire electrode breakage due to such cause may be avoided through detection and adaptive control based on the detection. To prevent wire electrode breakage, it is needed to arrange so that wear in between the feeder members provided on both upper and lower sides of the workpiece of the spark-generated position on the wire electrode in its axial direction in the opposed gap between the wire electrode and the workpiece can be definitely detected, and to varyingly control, eg the working conditions, by detecting the spark-generated positions every time a sparking pulse is created based on the impressing of a voltage pulse or every generated sparking pulse predeterminately sampled to discriminate whether the sparking positions are in a concentrating condition or not on the condition involving no breakage to the wire electrode, according to such as the concentrated or partially distributed condition of spark-generated positions of sparking pulses generated within the required period of time or by the predetermined plural number.

Various types of detectors of spark concentrations for conventional wire cut electrical-discharge machining apparatus exist. Most of these indirectly estimate the spark-generated positions, according to such as different sparking conditions to discriminate the concentrating situation. For example, in Laid-Open Japanese Patent Application 53-64899 (prior art 1), spark-generated positions are detected or measured in a nearly direct manner. A voltage measuring circuit is provided in which fluctuation of the electrical resistance between the current feed point and the sparking point to the wire electrode is caught by measuring the voltage therebetween.

Laid-Open Japanese Patent Application 59-30620 (prior art 2), disclosed an attempt to prevent wire breakage by detecting the current value flowing into the upper and lower feeders (or one-side feeder), extracting the changing rate of currents flowing into the feeder(s) from the current detected signal, comparing the rate of change of current with a predetermined value to detect the condition wherein sparks are concentrated on the same point on the side of the workpiece and resetting the working conditions in response to the detected signal. However, in the above disclosed art, the correlation between the moving speed of the sparking position on the wire electrode and the wire travelling speed is not taken into account. A system in which the moving speed of the sparking position on the wire electrode and the travelling speed of the wire electrode are detected and when the almost coincided condition of both speeds was held for more than the predetermined period of time, the concentrated sparking condition detected signal is delivered, is disclosed in Laid-Open Japanese Patent Application 62-54626 (prior art 3), considering that to detect the concentrated sparking condition at the same point on the wire electrode more susceptible of wire break was unlikely.

In prior arts 1 to 3 and the like, even if the spark-generated positions could be detected or measured with high accuracy, there are questions in existence of a concentration of sparks, discriminating method of a partially distributed or concentrated condition of spark-generation positions, determining the criterion of discrimination and the like. The above-mentioned prior art is not effectively conditioned for practical use.

For example, in the above art 2, a spark-generated positional signal detected every voltage pulse (specifically, a sparking current in the incoming-feeder circuit is detected while in gate off of machining voltage pulses and the hold value in the sample-hold is taken as the digital value through A/D conversion) is compared with that of the previous sparking pulse to detect the difference (by using an arithmetic unit or digital comparator). If there is a difference, a signal is delivered, while on the other hand, every time said spark-generated positional signal is given out, the output is integrally counted and when the predeterminately set number n is counted, the count of the counter delivering a varying control signal for the working conditions is reset by said difference signal. The count n of such as said preset counter, conditions of difference detection and values such as the number of times the difference detection delivering said reset signal is carried out can be freely regulated and set by using ones own experience, data and theory, according to such as the selectively predetermined working conditions and machining object. However, the machining efficiency is poor under settings which overestimate the safety levels, while, lower setting of safety will cause a breaking accident to the wire electrode, and is unpracticable, having no capability of doing preferable settings adapted to such as individual working conditions.

When detection of spark-generated positions is done according to the means disclosed in prior art 2, in reality the detection with satisfactory accuracy is not being carried out. The means using a difference amplifier disclosed in Laid-Open Japanese Patent Application 62-15017 et al (prior art 4) conventionally known as this type of spark-generated position detecting circuit and the like are insufficient in accuracy, and as described above, the prevention against wire electrode breakage is not effective without inversely affecting other machining performance.

Also in the art disclosed in prior art 3, if the concentration of sparks is attributed to chips and other foreign matter being cohered or stuck on the surface of the wire electrode, it can be acknowledged with advantage as is disclosed. However, such a situation is not encountered as it comes into question in practice while in machining. In today's usual working conditions, it may be considered that the situation in which the travelling speed of the wire electrode has to be taken as a parameter for control is unusual. That is, when the renewal feedrate of the wire electrode for a brass wire electrode of between about approximately 0.2 and 0.3 mm in diameter is about 3 to 8 m/min, depending, of course, on its kind and diameter, and other working conditions, such as a voltage pulse of about 1 µs or less in discharging time of sparking pulses, about 4 to 10 µs in quiescent time between sparking pulses, about 10 to 15 A in sparking current amplitude or selectedly more than that, and between about 100 and 170 mm²/min in machining speed, about 100 voltage pulses are supplied and impressed between the wire electrode and the workpiece while the wire electrode moves by about 1 mm, so that it is needed to first detect the spark concentrated condition in the location adjacent to said spark-generated position as against to trace the spark-generated position on the wire electrode, and then to carry out discrimination. In addition, according to a range of concentrated spark duration times of 50 to several 100 ms disclosed in prior art 3, the wire electrode moves by between about 5 mm and several 10 mm. The number of machining voltage pulses detected during that time, to be taken as discrimination data, will be approximately between 50000 to several 100000 pulses, and therefore, practically it seems to be difficult to take for example a set count of the counter 34 and frequency setting of the clock pulse generator 3 to be suitable values corresponding to predetermined wire cut spark machining conditions. Then, the invention is in accordance with the knowledge that the sparking condition in wire cut electrical-discharge machining, machining mode of such as the machining state and advancing mode in machining are roughly as follows:
The wire electrode is moving on a renewing feed basis between a pair of contacted positioning guides, while generating oscillations (including superimposed higher oscillations) mainly depending on such factors as material, diameter, distance of the guides and given tension, and further generating some other oscillation restricted by diversified conditions of the wire electrode travelling portion, eg, a narrow groove inside wherein a working is circularly intervened, when intermittent voltage pulses are applied to the gap between the wire electrode and the workpiece in the above condition when approaching them at a relative machining feed, an intermittent spark of approximately 10 kHz to several 10 kHz on average is initiated at the proximate portion or the intervening portion of, for example, foreign matter easily giving the capability of sparking. Said spark reciprocally moves at random in the axial direction of the wire electrode, ie along the thickness of the workpiece, and machining is advanced by evenly and equally subjecting to spark discharges overall. Then, when said spark takes place at such as said proximate portion as a new spark after the first of some interval, a number of chips, gas, bubbles and the like intervene around said sparking point as a result of a spark, and an arbitrary number of voltage pulses successively supplied and impressed at a frequency of up to approximately 100 kHz (eg, also for the same energy system disclosed in Laid-Open Japanese Patent Application 44-13195, suppose a spark discharge takes place almost at the same time as initiating to impress the voltage pulses, as the sparking frequency, it will be nearly the same), usually, plural pulses strike sparks mostly at said sparking point or thereabouts in succession (of course, not all voltage pulses strike in succession; more than one part, as drawn out, strike sparks in other locations and also some voltage pulses remain unsparked) and a kind of slight concentration of sparks occurs. Although said part has such as oscillations of the wire electrode for other cause, the gap is then more likely to expand due to factors such as the sparking pressure and produced gas, and chips and the like diffuse and move to the circumference, thus sparks mostly take place at the gap in the other location, and as described above, machining is carried out under such the sparking condition as moving to the other location after striking by an arbitrary number of sparks.

It is therefore difficult to detect the concentrated sparking condition depending on the exactness of the detection of spark-generated positions and the processing procedure for multiple signals of detected spark-generated positions. Of course, the above relates to the cases where the machining gap and machining condition are normal: normal sparking or normal machining. The concentrated sparking condition to be detected so it can be avoided means: though there are various unknown causes, in cases when the machining feedrate increases when the workpiece becomes thicker while machining under the normal sparking condition as described above, to produce a supply of working fluid becomes unsuitable or insufficient due to the change in tapered angle when machining comes near to the corner part of the profile configuration to be machined or when foreign matter and the like adheres to the wire electrode or a local part of the workpiece, an overheated spot is created. The gap in the location where several sparks took place does not extend due to the arc-like discharges and inversely there becomes proximate or a short circuit, or the sparks produced at a certain location become arc-like, etc, and then, sparks in said location are continuously repeated to continue, the sparks for a period of several times longer than or of further several times as much as a kind of slight concentrated sparking condition in said normal machining take place, and in some cases, they are in an arc-like concentrated sparking condition near the aerial discharges. Thus, finally, the wire electrode breaks.

In view of the foregoing problem, in order to prevent the wire electrode from breaking while machining, it is a general object of this invention to provide a spark-status detector catching a partially distributed condition of the above generated positions by detecting the generated position of the spark discharge pulse in the axial direction of the wire electrode every time a spark discharge pulse occurs, and preferably, by detecting the above generated position with accuracy. It is a further object of this invention to obtain a wire cut electrical-discharge machining apparatus arranged so that, based on the generated condition of the above biased status detecting signal, whether it is in a foreseeing condition of concentration of sparks or not is discriminated, and based on said discriminating signal, to vary control to some extent whereby the machining load is slightly reduced without exceedingly reducing the machining efficiency out of working conditions, and further, based on the generated condition of said foreseeing condition discriminating signal of spark concentration, whether it is in a breaking limit condition involving a breakage to the wire electrode or not is discriminated, and based on said discriminating signal, the working conditions can be substantially varyingly controlled to those whereby the wire electrode is not broken in substance.

According to the present invention there is provided a detection system for a wire cut electrical discharge machining apparatus including a renewable wire electrode movable in its axial direction through a working zone in which a workpiece to be machined is adapted to be disposed, said wire electrode being held under tension and during machining in contact with upper and lower electrical feed members, said upper and lower electrical feed members being disposed on opposite sides of the working zone, said workpiece and said wire electrode, during machining, forming a working gap across which machining pulses are impressed in order to produce spark discharges between said wire electrode and said workpiece, said detection system comprising:
current detector means arranged to detect a spark current flowing into one or both of said electrical feed members and characterised by;
a spark position detecting means connected to the current detector means for amplifying the detected current and generating a signal corresponding to a spark discharge position, along the axial direction of the wire electrode between said upper and lower electrical feed members;
a digital data arithmetic unit connected to the spark position detecting means for converting the output signal therefrom into digital data corresponding to said spark discharge position; and
a spark status detector receiving the digital data and responsive thereto for generating a spark discharge bias signal when the digital data output by said digital data arithmetic unit is within a bias range established by an upper limit value and a lower limit value and for delivering a spark position dispersion signal when the digital data output by the digital data arithmetic unit is outside the bias range and for resetting the upper and lower limit values for a new spark discharge position bias range based on a detected spark discharge position.

In order to deductively increase the detecting accuracy of said spark-generating positions, it is preferable to provide an arrangement comprising: upper and lower peak holding circuits detecting the peak-point currents detected by the upper and lower current detectors every time said sparking pulse is created, a difference amplifier as the spark-position detecting means extracting the difference between peak-point currents latched by both peak holding circuits to give out the signal accommodating to the sparking position, and in order to do after an extra-short time after the termination of the gate signal of said sparking pulse when converting output values from said difference amplifier into digital data as the information about the sparking position each time said sparking pulse occurs, a delay timing circuit for said gate termination signal additionally formed in said digital data arithmetic unit for spark-generated positions.

It is preferable to arrange so that the accuracy in detecting said spark-generated position may not decrease or vary at the time of changing to the predetermined electrical working conditions, and when the spark positional signals obtained through said difference amplification are supplied to said arithmetic unit to convert them into digital data, the degree of amplification of the inversed amplification circuit amplifying said spark positional signal according to the predetermined working conditions related to the magnitude of a sparking pulse width is alterable.

In one embodiment of said spark-position biased status detector in said spark-status detector, there is provided an adder and a subtractor unit adding and subtracting the pre-selectively determined digital data to the digital data for the spark-generated position delivered from said arithmetic unit, and setting a spark-generated position biased area with a sufficient small data width as against the digital data corresponding to said workpiece thickness having upper and lower limits predetermined by the above added and subtracted digital data, taking digital data for said output spark-generated position as a reference, comparators comparing digital data for the spark-generated position delivered from the arithmetic unit every sparking pulse with the upper and lower digital data values in the predetermined spark-generated position biassed area, and a logic circuit logicising the outputs from both comparators based on the delayed timing signal every time said sparking pulse occurs, delivering a spark-position biased signal when the output spark-generated position data from said arithmetic unit are over the lower limit and below the upper limit in said spark-generated position biased area, while, delivering a spark-position dispersion signal when said spark-generated position data are below the lower limit and over the upper limit, and resetting the upper and lower digital data for said predetermined spark-generated position biased area to allow the above biased area to update by the digital data for the spark-generated position of said sparking pulse.

A wire cut electrical-discharge apparatus in accordance with a further embodiment of the present invention comprises; in the foregoing first device, discriminators provided with a counter into which said spark-position biased signal and spark-position dispersion signal are entered, the counter being arranged so that it integrally counts said biased signals and clears the count of said integral biased signals in response to the input of said dispersion signal, and a discriminator delivering a spark concentration foreseeing status discriminating signal [SIG 1] as a display, warning, discriminating or work conditions control signal when the integral count of said biased signals exceeds the required set value.

A wire cut electrical-discharge machining apparatus according to a yet further embodiment of the present invention comprises; in the foregoing second embodiment, breaking limit discriminators for the wire electrode based on both or either one of duration times range and frequency of occurrence of the foreseeing status discriminating signal [SIG 1] delivered by the spark concentration foreseeing status discriminator, a means detecting the duration times range of said signal every time the foreseeing status signal is entered and producing a duration limit signal [SIG-W] in response to the input of a discriminating signal that the duration times range reaches the required set time value, a means producing a generation times limit signal [SIG-N] when the generating input state of the foreseeing status discriminating signal reaches the number of required generation times set in advance within the preset sampling time, and a breaking limit discriminator for the wire electrode delivering a limit discriminating signal [SIG 2] for working condition control, including to stop machining in response to both or either one of said duration limit signal and general times limit signal.

With the embodiment having said breaking limit discriminator for the wire electrode, it is preferable to provide an arrangement comprising: a reset means for the wire electrode breaking limit discriminator counting the generation times of the foreseeing status discriminating signal that said duration times range does not reach the set limit [A>B-W] until a new limit output signal is detected and delivered after the output of the limit signal [SIG-W] from said duration limit signal generator, releasing a held signal of said duration limit signal [SIG-W] delivered previously when said count reaches the required set value; counting a signal [SPCK 1] delivered every required sampling time until a new limit signal [SIG-N] is produced when the count of the foreseeing status discriminating signal does not reach the predetermined value within the required sampling time set in advance after the output of the limit signal [SIG-N] from said generation times limit signal generator, and releasing a signal hold of the generation limit signal delivered previously when said count does not reach a predetermined value to cancel said limit discriminating signal [SIG 2] for working conditions control.

Embodiments of the present invention will now be described, by way of example only, with reference to the accompanying drawings, in which:
Figure 1 is a block diagram representing the general arrangement of one embodiment in connection with first and second devices of the present invention;
Figure 2 is an illustration of a connecting circuit for the parts of a power system 7A and a control device 7 for wire spark machining in Figure 1;
Figure 3 is an illustration of a peak holding circuit as an example of a holding circuit of Figure 1;
Figure 4 is an illustration of a connecting circuit for the parts of a difference amplifier as a spark-postition detecting means 11 and a digital data arithmetic unit 12 for spark-generating positions in Figure 1;
Figure 5 is an input/output voltage or current waveform and a timing chart for individual parts of circuits in Figures 1 through 4, and A, B, C and D are illustrations representing the cases where some differ in width of a gate signal G2 and others in discharging condition;
Figure 6 is a waveform and timing chart when a peak holding circuit is used;
Figure 7 is a time characteristic chart of distributed conditions of the digital data values PD at spark-generating positions at the time of steady machining;
Figure 8 is a time characteristic chart of distributed conditions of the digital data values at spark-generating positions at the time of short-circuiting or concentration of spark discharge;
Figure 9 is a block diagram representing the general arrangement and connected relationship of the spark-position biased status detector 15 and a spark concentration foreseeing status discriminator 16;
Figure 10 is a descriptive chart for explaining the mode carrying out the biased status detection of sparking positions and foreseeing status discrimination of spark concentration according to the circuit means in Figure 9;
Figure 11 is a block diagram representing the general arrangement of one embodiment in connection with the a device of the invention;
Figure 12 is a block diagram in connection with a specific example of breaking limit discriminator 47 in Figure 11;
Figure 13 is a block diagram in connection with a specific example of a reset device 48 for the breaking limit discriminator in Figure 11; and
Figure 14 is a timing chart of sampling pulses SPCK 1 and SPCK 2 concerning actions in Figures 12 and 13.

An embodiment of the invention is described in detail as follows:

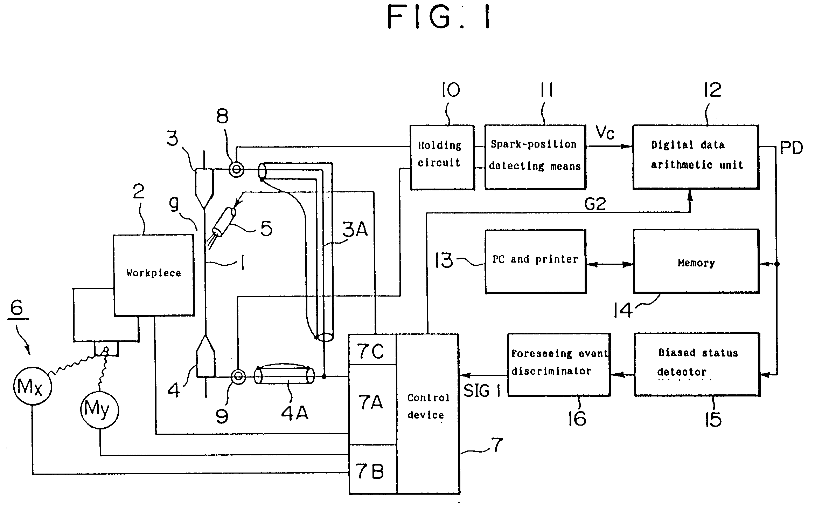

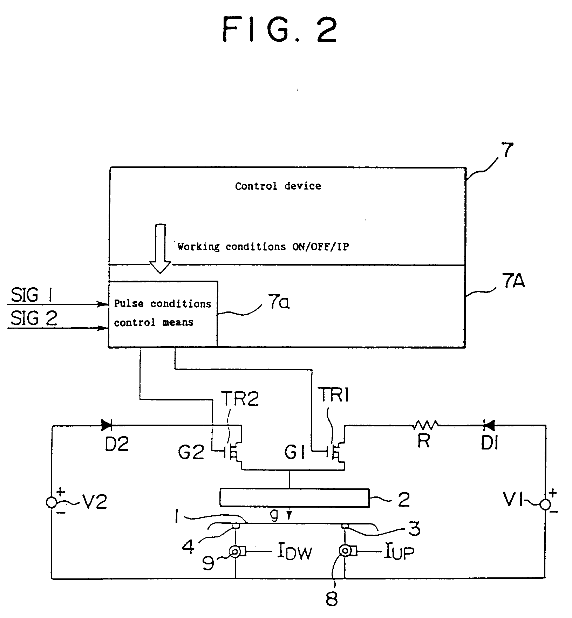

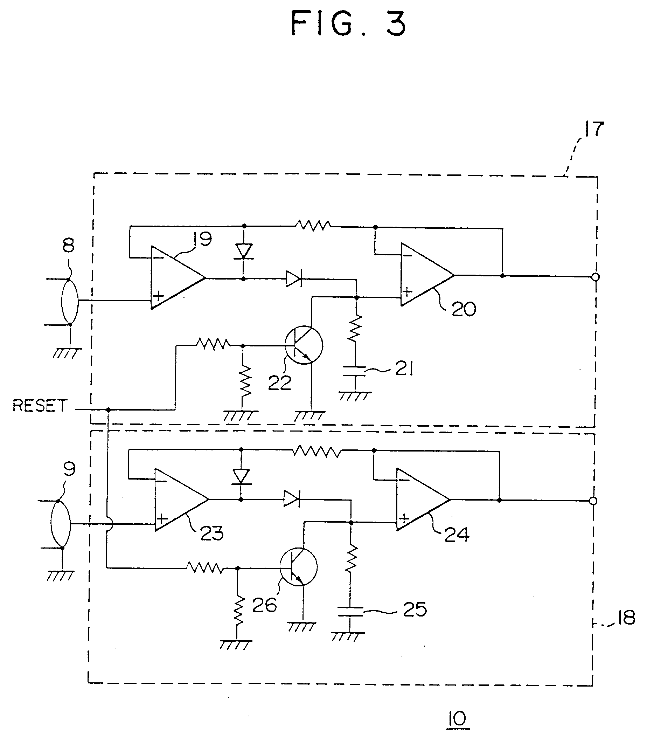

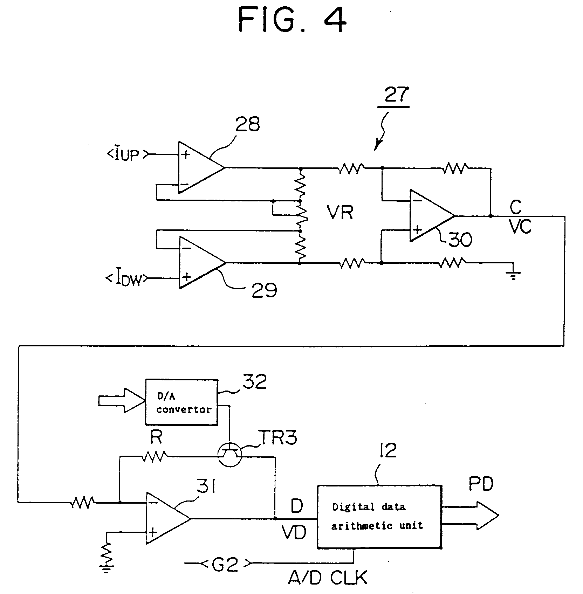

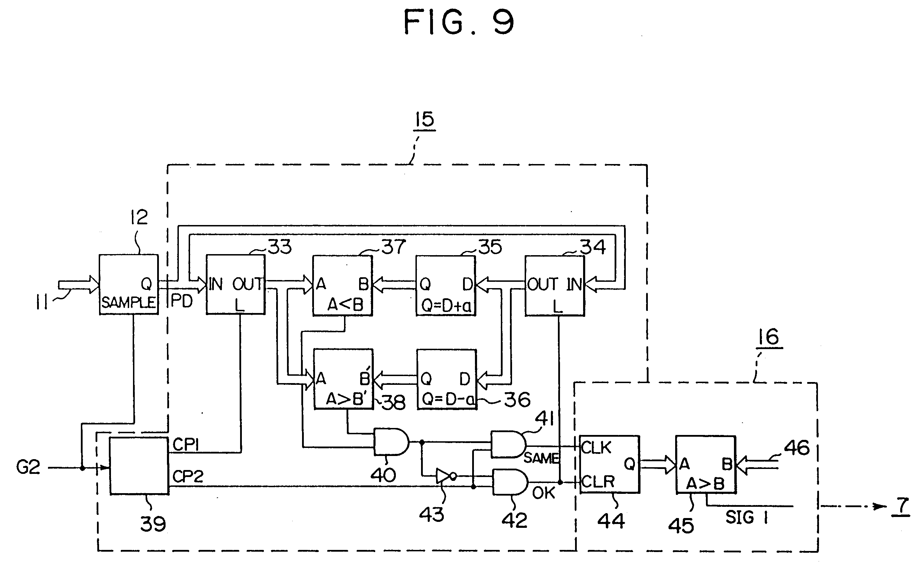

Figure 1 is a block diagram representing an embodiment of the first and second devices of the present invention; 1 is a wire electrode travelling on a renewing feed basis in the axial direction at a predetermined tension to the interspace between positioning guides positioned a distance apart. Machining is carried out by opposing a workpiece 2 from a direction at almost right angles to the axial direction of said electrode spaced across a very small gap g, supplying and impressing voltage pulses across the workpiece 2 and the wire electrode 1 from a wire cut electrical-discharge machining power system 7A (Figure 2) through upper and lower interpole lines 3A and 4A and upper and lower feeder members 3 and 4 across a working fluid provided in said gap g by means of jetting from a nozzle 5 to generate intermittent sparking pulses, and giving a relative machining feed on the plane in said right-angled direction though a feeding mechanism 6 having axis feed motors Mx and My on the X-Y plane; 7B is a machining feed driving circuit; 7C is a working fluid supply circuit; and 7 is a wire cut electrical-discharge machining control device incorporating an NC unit which, for such as the power system 7A and circuits 7B and 7C, carries out settings, changes and control to such as the established working conditions, programs and various control signals. 8 and 9 are upper and lower current detectors detecting shunt discharge currents supplying through the feeder members 3 and 4 to a wire electrode 2 on the output parts of the upper and lower interpole lines 3A and 4A at the time of generating said sparking pulses; 10 is a pair of holding circuits arranged as required so that detected signals of the detectors 8 and 9 are entered, and usually sample holding circuits are formed to activate them so that, for example, the detected signals are latched by synchronizing to the termination of spark-pulse gate signals. The most desirable mode of said holding circuits of the invention is that peak holding circuits (Figure 3) are formed to latch the voltages accommodating to the peak point of the detected current signals. 11 is a spark-position detecting means amplifying the output signals from said current detectors 8 and 9, or the output of holding voltage furnished as required as above, and giving out a spark position signal VC accommodated to the sparking position in the axial direction of the wire electrode between said pair of feeder members 3 and 4. When a pair of upper and lower current detectors 8 and 9 are formed as the more desirable mode of carrying out the above-stated invention, there is provided an arrangement having a difference amplifier (Figure 4) differentially amplifying both detected signals or holding signals. 12 is a digital data arithmetic unit (Figure 4) for spark-generated positions converting the spark positional signal amplified by said spark-position detecting means 11 into digital data, eg, eight-bit digital data, as information to give out; 14 is a memory storing the digital data PD for spark-generated positions output by said arithmetic unit 12; 13 is a PC with printer carrying out the required operation and processing for the digital data stored in said memory 14 in response to operator control and requirements to produce for example a hard copy; 15 is a spark-position biased status detector (Figure 9) discriminating said sparking positions as a biased spark in or out of the biased area renewedly set in succession or dispersion spark based on the digital data PD delivered from said arithmetic unit 12; 16 is a spark concentration foreseeing status discriminator (Figure 9) delivering such as a display, warning, discriminating or working conditions control signal [SIG 1] in response to, eg the frequency of occurrence of the biased spark signal delivered by the biased status detector 15 and the discriminated result. Also 7 is a wire spark machining control device including an NC unit that receives the spark concentration foreseeing status discriminating signal delivered by said discriminator, carries out the first slight varying control, for example, allows all or more than one of said wire spark machining power system 7A, machining feed drive circuit 7B and working fluid supply circuit 7C to slightly reduce the machining mean current, machining feedrate or to slightly increase the jetting pressure and flow rate of working fluid to check to see the change in machining condition.

Figure 2 shows an example of a double pulse supply system of high voltage-small current and low voltage-large current as an example of the power system 7A, wherein V1 is an auxiliary supply of high voltage-small current, for example, of 300 volts or thereabout; V2 is a main supply for machining of low voltage-large current, for example, of 100 volts or thereabouts, as against said auxiliary supply; D1 and D2 are reverse-current protection and securing diodes respectively; R is a current limiting resistance; TR1 and TR2 are on-off switching elements for said auxiliary supply V1 and main supply for machining V2 consisting of eg MOS-field-effect transistors; G1 and G2 are input gate signals with respect to said switching elements TR1 and TR2, which enter between the gate source terminals of said switching elements TR1 and TR2 from a setting and control means 7a for pulse conditions in the machining power system 7A which is set and controlled by the wire spark machining control device 7 including said NC; then, supplies a voltage or sparking pulse with desired polarity, voltage or sparking duration, quiescent time, and amplitude value of current between the wire electrode and the workpiece 2.

Figure 3 shows an example of the peak holding circuit of the preferred embodiment of the sample holding circuit for detected signals arranged when required between said current detectors 8 and 9 and the spark-position detecting means 11 amplifying the above detected current signals to deliver the spark positional signal adapted to the sparking position. An embodiment of the illustration comprises upper and lower peak holding circuits 17 and 18 for each of current detectors 8 and 9 depending on the current detection on the upper and lower sides as a preferred embodiment. The peak holding circuits 17 and 18 comprise holding capacitors 21 and 25, two operational amplifiers 19/20 and 23/24 each, and reset transistors 22 and 26 wherein reset signals emitting holding charges to reset the circuits are entered.

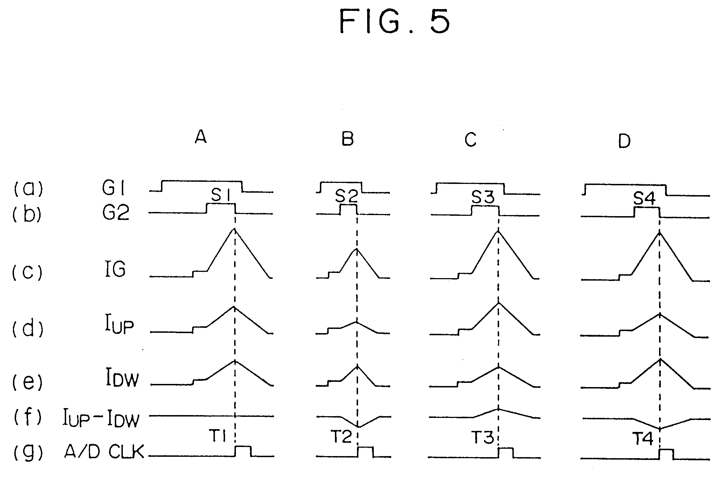

Figure 4 is a circuit diagram of an embodiment of the spark position detecting means 11 which, when holding circuits amplifying the current signals detected by said current detectors 8 and 9 or latching the above detected current signals are provided, amplifies those holding signals to deliver the spark positional signal accommodated to the sparking position and a block diagram of the part of the digital data arithmetic unit 12 for said spark-generated position, and as an embodiment of said detecting means 11, it shows an example using the difference amplifier 27 as the amplifier accommodating to a case where current detection is carried out at parts of both upper and lower feeder members, being a preferred embodiment. In said difference amplifier 27, 28 and 29 are operational amplifiers into which said upper and lower detected current signals Iup and Idw are input. It is adapted so that their outputs are amplified by an operational amplifier 30 after regulating the difference between those current signals detected (Iup - Idw) [see Figure 5 (f)], for example, so that said difference (Iup - Idw) is all but zero when a spark discharge took place at the position on a half of the wire electrode 1, and just middle between the upper and lower feeder members 3 and 4, against the workpiece 2 and thereby a spark positional signal VC is delivered. Said arithmetic unit 12 inputs said spark-position signal VC to carry out A/D conversion and operation; then, the analog signal on the sparking position corresponding to the difference between the detected current signals is output by converting, eg, into eight-bit digital data PD. Then, in this embodiment, said spark positional signal VC is arranged so that a signal VD regulated to the working conditions enters into the arithmetic unit 12 through an amplifier circuit, such that an amplification factor varies inversely as the machining voltage or sparking pulse width (time) of working conditions. The amplifier circuit consists of an operational amplifier 31 for inverted amplification of said signal VC, a transistor TR3 inserted in a feedback circuit of said amplifier 31 to convert and regulate the amplification factor, and an A/D convertor 32 whereby signals are supplied to the transistor TR3 so that the amplification factor is in inverse proportion to the voltage or sparking pulse width of predetermined working conditions; that is, said gate signals are measured by counting to give out analog signals. The reason why the amplifier circuit is so arranged is that with this type of wire cut electrical-discharge machining, the amplitude of the current that the electrical working conditions may appear as a setting or phenomenon with respect to the voltage or sparking pulse width, and time to be set or desired is very excessive, with the result that the waveform of the sparking current will be triangular wave-like, as a rule, whereupon the sparking current will not rise up to the predetermined value or more under the voltage or sparking pulse width of usually set working conditions Therefore, by only differentially amplifying the difference between the above detected current signals (Iup - Idw) with a spark-position detecting means 11, as described below with reference to Figure 5, it is optionally impossible to make a distinction of detected sparking positions for different said voltage or sparking pulse width settings.

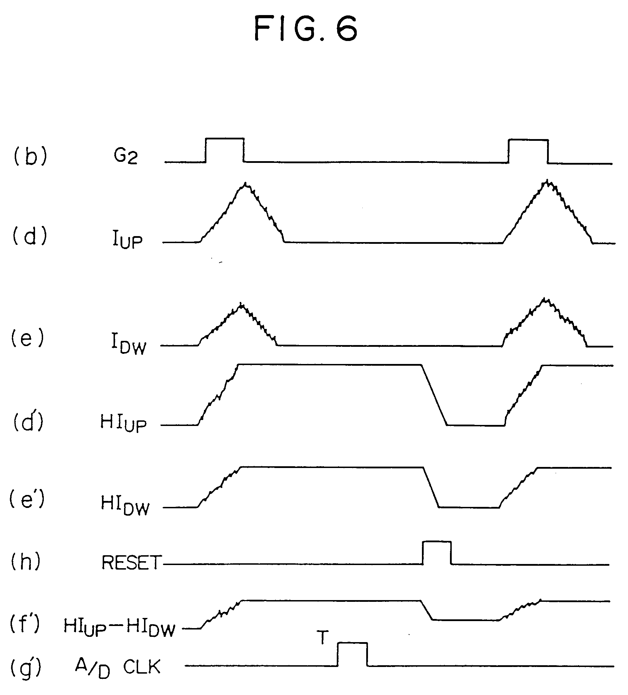

Figures 5 and 6 show, eg, input/output voltages, current waveforms and their timing for individual parts in block diagrams and circuits in said Figures 1 to 4. Figure 5 shows waveforms when holding circuit 10 is provided, while, Figure 6 shows waveforms when holding circuits 17 and 18 in Figure 3 are provided as the holding circuit 10. In Figure 5; A, B, C and D show the case where the voltage or sparking pulse gate signal (b) G2 is the same pulse width for A, C and D ($\text{S1 = S3 = S4}$), wherein A is the case when the difference (f) $\text{(Iup - Idw) = 0}$, C is in the case of a certain value added to the difference, and D is minus the difference, whereas B is the case when said gate signal (b) G2 is less than S1 (= S3 = S4): the width of the pulse is narrow, and conditions are set for higher precision machining.

In Figure 5, G1 of (a) shows the gate signal of said switching element TR1, G2 of (b) shows the gate signal of the same element TR2, IG of (c) shows the waveform of the sparking current (Iup + Idw), Iup of (d) shows the upper detected current signal flowed from the sparking point to the workpiece 2 through the wire electrode 1 from the upper feeder member 3 that is detected by the upper current detector 8, Idw of (e) shows the lower detected current signal as well, Iup - Idw of (f) shows the difference between said upper and lower detected signals, and A/D(CLK) of (g) shows the timing pulse generated by synchronizing the termination and turning off of the gate signal G2, allowing the digital data arithmetic unit 12 of said spark-generating position to begin arithmetic operation to convert said input signal VD into digital data.

A, C and D show the case when the same value was set for the voltage or sparking pulse, the spark of A is taken to be a spark discharge fired at the part just midpoint between the feeder members 3 and 4 (in reality the possibility of being a slightly upper or lower spark as against the midpoint is acute, for it is regulated by the variable resistance VR of said difference amplifier 27), the sparks of C and D are upper and lower spark discharges as against the midpoint respectively. Their sparking positions can be checked by monitoring the digital data PD converted and computed by the arithmetic unit 12.

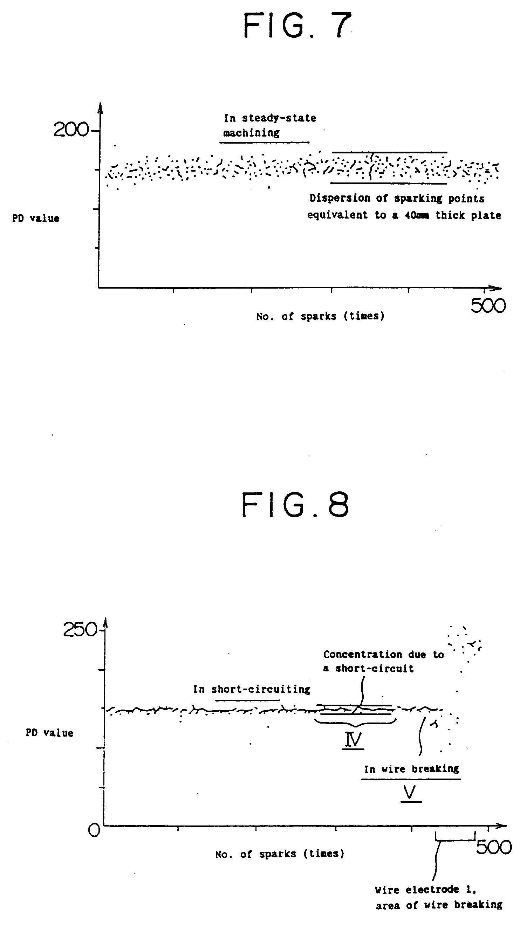

Figures 7 and 8 are characteristic charts of digital data PD for spark-generated positions operationally output in succession every time a sparking pulse is created as above described, or based on the sparking pulse sampled when required as a pulse of every three pulses when a 40 mm thick workpiece 2 was machined. Figure 7 shows steady-state machining and Figure 8 shows machining under unsteady-state conditions, as short-circuiting, concentrated sparking and wire breaking, and then, plotted on the graph chart graduated digital data values (A/D converted spark-generating positional signals PD) from said arithmetic unit 12 vertically and number of sparks (= time) horizontally. In steady machining (Figure 7) involving almost no concentration of sparks, the passage of machining time is such that plotted spark positions points are random and almost evenly scattered over the whole thickness of the workpiece 2 in the axial direction of the wire electrode 1, while, in the cases caused a short-circuit as just before breaking of the wire electrode 1 and spark concentration (Figure 8), most plotted spark position points are concentrated at the location on a short-circuit point along the plate thickness (40 mm) of the workpiece 2, a partial scattering to the perimeter is found, and yet plotted points are in linearly intermittent relation along the time base. Suppose this relation continues, V wherein the wire electrode breaks will result, advancing a concentrated linearization of plotted points as a part IV; and when the wire electrode 1 has broken, both its ends will come in contact with the workpiece 2 and others, and strike sparks as a result of their gambols. Sparking point positions will then strike out in the axial direction of the wire electrode 1 beyond the plate thickness of the workpiece 2. According to the invention, by providing an arrangement so that the spark-generating positions can be detected and distinguished with higher accuracy, an apparatus having the ability to detect the break of the wire electrode 1 can be arranged.

Figure 6 is a waveform chart when, as the holding circuit 10 for detected current signals, the peak holding circuit (Figure 3) was arranged between the current detectors 8 and 9 and the spark-position detecting means 11 as described above, wherein HIup of (d') is a peak holding wave-shape of upper detected currents, HIdw of (e') is a lower peak holding wave-shape. The signal equivalent to the peak value of detected current signals is held until the RESET signal of (h) is delivered, their difference: HIup - HIdw of (f') is differentially amplified, and a time setting pulse T of (g') fairly delayed as against the back-up time of gate G2 as shown in Figure 5 is delivered at the time of amplifying the peak holding difference to allow the digital data arithmetic unit 12 to carry out conversion into digital data PD. As described above, when the voltage or sparking pulse under the predetermined working conditions is relatively wide as against, in particular, the amplitude of the sparking current, and an amplitude of sparking currents IG of (c) rises to the predetermined maximum value by the termination of the pulse width, of course, there is no need to allow said time setting pulse T to delay.

Signal VD is obtained as follows: The spark positional signal VC in Figure 4 is regulated by the variable gain inversion amplifier consisting of the operational amplifier 31 and others. For example, as compared the spark B of a short gate signal and the spark D of longer than that, the difference of both detected current signals are equal: $\text{B(Iup - Idw) = D(Iup - Idw)}$; with the signal VC only amplified by the difference amplifier 27 of the spark-position detecting means, when it is converted into the digital data PD by the arithmetic unit 12, the possibility of taking to be sparks in the same position is high, however, in response to the upper detected current signal (d) and lower detected current signal (e) of individual sparks, the ratio of upper to lower is 1:2 for spark B and 2:3 for spark D; then, they are recognized as sparks in different positions; approximately 67% and 60% plate thickness of the workpiece 2 from the bottom, respectively. Thus, there is provided an arrangement so that as described above, an internal resistance of the transistor TR3 is controlled to obtain the signal VD amplified and regulated; then converted into digital data for sparking positions.

With reference to Figure 9, there follows a description of the spark-status detector 15 for sparking positions that detects the sparking position of each sparking pulse or sampled sparking pulse and, based on the data PD converted into digital data, detects whether the spark-generating positions are in a biased condition or not, and of the discriminator 16 that gives out a signal to carry out the first control, eg, to repeatedly detect the biased condition to foresee a condition of spark concentration and allow the wire spark machining control device 7 to increase the quiescent time of voltage pulses to slightly decrease the machining mean current when the detected partially distributed condition returned to the normal without continuing to more than some extent.

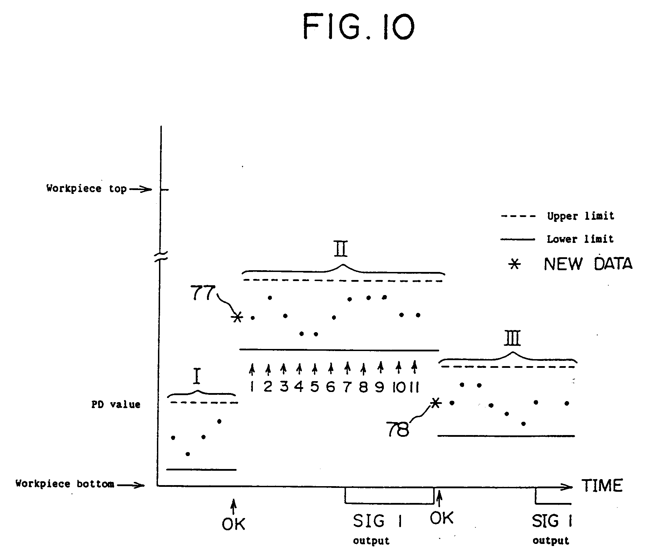

Said spark-position biased status detector 15 comprises: first and second latching circuits 33 and 34; adjusters 35 and 36 presetting the upper and lower limits in the biased area by receiving an output latch signal from said second latching circuit 34; first and second comparators 37 and 38 comparing spark-position data (A) for the updated sparking pulse delivered from said first latching circuit 33 with the upper and lower limit position data (B) and (B') in the biased area set in said adjusters 35 and 36; a delayed timing pulse generator 39 synchronizing the closing of said gate signal, turning on said timing pulse T and the like, to give out a timing pulse CP1 of a latch command to the first latching circuit 33, slightly delaying on giving out said timing pulse CP1 to deliver a delayed timing pulse CP2, and giving out the biased status detected signal; and a logic circuit which receives the signal output of the compared result from said two comparators 37 and 38, makes a logical measurement according to the occurrence of the delayed timing pulse CP2, delivers a biased status detecting signal SAME if the above generated position is within the predetermined biased area, while, if out of the thickness, delivers a spark-position dispersion signal OK. Three AND-circuits 40, 41 and 42 and one invertor circuit 43 are included. In addition, said broken-wire-electrode discriminator 16 comprises a counter 44 wherein the biased status detecting signal SAME is entered into the count terminals and the dispersion signal OK is entered into the reset terminals and having terminals delivering the current count of the signal SAME, and a comparator 45 delivering the spark concentration foreseeing status discriminating signal SIG 1 to said wire spark machining control device 7 when the output count of said counter 44 exceeded the predetermined value, and having a comparative value adjuster 46 (not illustrated). Figure 10 is a chart illustrating modes carrying out the biased status detection of sparking positions and the foreseeing status discrimination of spark concentration according to the circuit in said Figure 9, and shows time horizontally, and digital data PD for sparking positions delivered from the arithmetic unit 12 along the workpiece thickness vertically. Biased areas of predetermined spark-generated positions in machining time zones I, II and III are represented with broken and solid lines for upper and lower limits respectively, and data plots marked with * at 77 and 78 in the areas I and II are digital data for initial spark-generated positions concerning settings for said areas. The comparative setting number of the comparator 45 delivering said spark concentration foreseeing status discriminating signal is 6.

For the upper and lower limiting position data (B) and (B') in the biased area upper and lower limit adjusters 35 and 36, when the digital data value of a new generated sparking pulse from the digital data values PD of spark-generated positions are plotted in the area I with the value marked with * at 77 beyond the upper and lower limiting values in the area I, the spark-position dispersion signal OK is delivered from the AND-circuit 42 by the signal that the sparking position of said sparking pulse is out of the area I and the delayed timing pulse CP, said dispersion signal OK enters into the counter 44 to reset the count value therein and also to the second latching circuit 34 to latch said digital data value 77 marked with * being delivered from the arithmetic unit 12, and then enters said latch data 77 into said adjusters 35 and 36. For said adjusters 35 and 36, when new data 77 is entered, the predetermined same or arbitrarily different data (a) one other are added and subtracted in the adjusters 35 and 36, respectively, to set the biased area II with the required width (2a, eg, about 6 mm in plate thickness along the thickness of the workpiece 2 with the above latched digital data value 77 (D) at centre, and the adjusters 35 and 36 deliver as comparative data for comparators 37 and 38, taking the added data (D+a) and subtracted (D-a) as the upper and lower limiting data (B) and (B') in the biased area, respectively.

Next, assuming the digital data PD delivered from the arithmetic unit 12 and based on the spark generated position of a new sparking pulse or sampled sparking pulse behind the required plural number after the latch and a sparking pulse of data 77 assigned a new biased area, was the arrowed data indicated at 1, said data 1 are latched in the latching circuit by the timing pulse CP1 and delivered to the comparators 37 and 38 to compare with the upper and lower limiting values in said new set area, and signals are delivered from both comparators 37 and 38 if data 1 are within said upper and lower limiting values. At this time, the delayed timing pulse CP2 is given out slightly late as against said timing pulse CP1, and a signal SAME detecting that the generated position of said sparking pulse is in a biased condition within the biased area set by the said data 77 is delivered, and said signal SAME is counted by the counter 44 of the foreseeing status detector of spark concentration. At data 1, the output from said AND-circuit 40 is inverted by the invertor circuit 43 to deliver to the AND-circuit 42, and the AND-circuit 42 does not give out the spark-position dispersion signal OK, even if the delayed timing pulse CP2 is entered after a short time. Thus data 1 are not latched in the latching circuit 34 and a renewed setting for the biased area by the data 1 is not carried out.

For subsequent sparking pulses 2-11 after the illustrated one, their individual data 2-11 are in a biased condition within the upper limiting value in the above set area II and the same circuit action as above is repeated. However, the comparative setting number of the comparator 45 of the spark concentration foreseeing status detector is 6, so that the biased status signal SAME is continuously delivered from the AND-circuit 41 by 7 signals according to the data 7 by a sparking pulse 7 and by the counter 44. If said count of 7 exceeds said comparative setting number 7, said comparator 44 delivers the spark concentration foreseeing status discriminating signal SIG 1 meaning that the spark generated position is in a condition likely to slightly concentrate from a biased tendency and to be careful, and this condition is further continued until new data for the next sparking pulse is entered after expiry of a sparking pulse 11. When the data 78 for the next sparking pulse 78 marked with * is entered, latched in the latching circuit 33, and then compared by the comparators 37 and 38, no signal is delivered from the AND-circuit 40, because the data 78 are beyond the area II smaller than upper and lower limiting data in the area II set in the comparators 37 and 38. The dispersion signal OK is delivered from the AND-circuit 42 as said data 77 is entered for the sparking pulse 77, the count of the counter 44 is reset to cancel said spark concentration foreseeing status discriminating signal SIG 1 and to reinstate the controlled condition under the control device 7, and then the detector prepares for detection of the biased condition of the next spark-pulse generating positions, latching the data 77 to the latching circuit 34 and setting the upper and lower limiting values in a new biased area III to the adjusters 35 and 36 with the data 77 at centre. In the example illustrated in Figure 10, the sparking pulses after the discharge device moved to the area III also continue beyond 7 pulses, and their individual data are within the area below the upper limit and over the lower limit, so that the biased status detecting signal SAME is continuously counted by more than seven and the spark concentration foreseeing status discriminating signal SIG 1 is delivered again at the point when seven signals are counted. However, usually, while in normal machining, it is common to be more random, as before counting the biased status detecting signal SAME by four or six, the discharge device moves to carry out settings of a new biased area.

As described above, according to the first embodiment (Claim 1) of the invention, for detection of the biased condition of spark-generated positions of generated sparking pulses, the detection of the spark-generated positions of sparking pulses generated at the wire electrode between a pair of feeder members and guide members and the workpiece in the axial direction of the wire electrode, ie along the workpiece thickness, is carried out by detecting and amplifying the current value flowing to one or both of the feeder members. However, when detecting the biased condition of said detected spark-generated positions, it is arranged so that the detected spark-generated positional signal VC is converted into digital data as the information of the spark-generated position in the axial direction of the wire electrode, which of area, s data said digital data relate, upper/lower limit inward/outward, of digital values of the spark-generated position biased area with the desired width sufficiently smaller than the workpiece thickness in the axial direction of the wire electrode is detected, when said digital data delivered by detecting every sparking pulse is a value within the area of below the upper and over the lower limiting values in the biased area, the biased signal SAME is delivered, while when said digital data value is a value beyond the biased area of below the upper or lower limit value in said biased area, the dispersion signal OK is delivered, and the upper and lower limiting digital values in a new spark-generated position biased area including the digital data value of said spark-generated position are set to prepare for the detection of the biased condition of digital data for the next delivered sparking position.

Thus, in cases where the generating positions of sparking pulses on the wire electrode and/or on the workpiece generated in succession in the machining gap are concentrated almost on one point and are biased in an arbitrary, desired, very small area in the axial direction of the wire electrode, the capability is given of detecting and it is ready to cope also with the problem in travelling speed of the wire electrode (as pointed out in the above-stated prior art 3) by setting the area to be detected in required measure by updating settings of the width of and movement of the area. It is arranged that detected signals of spark-generated positions are converted into digital signals to carry out the detection and discrimination, so that such as the distribution by comparative discrimination are also carried out to pieces, exactly and clearly, and the sparking condition is then detected more precisely.

Moreover, the device claimed in Claim 2 is intended to improve the detecting accuracy of spark-generated positions in the first embodiment. Current detection is arranged on both upper and lower sides and a peak hold is made so that individual maximum values of detected currents are taken as the positional signals to be objective, difference amplification is carried out for both detected positional signals, and then, timing setting is carried out so that the point converting said difference amplified signals into digital data is to be after said peak hold.

The device disclosed in Claim 3 relates to the problem that the difference of both signals becomes the same and the spark-generated positions also conincide but the detected current peak flow values are unlike due to the difference of the predetermined working conditions, particularly voltage pulse circumstances of electrical working conditions. By carrying out such as difference amplification for both upper and lower detected positional signals in the device in Claim 2, digital data for correct spark-generated positions can be obtained, even by a change in working condition, by arranging so that before converting said difference amplified signals into digital data, they are amplified by the amplifying circuit whereby the amplification factor is varied according to the voltage pulse of the working conditions.

The embodiment of the invention of Claim 4 relates to the matter that a biased status detecting signal SAME of the spark-generated position delivered by the spark-status detector of said first device is arranged so as to be counted every time a spark position dispersion signal OK is delivered, the spark concentration foreseeing status discriminating signal SIG 1 is delivered when said count exceeds the predetermined value, and said signal is used to take measures to reduce machining loads, eg, by displaying and warning, and said signal is entered into the wire spark machining control device 7 to carry out the arrangement so as to control to reduce machining loads. However, usually a wire electrode breaking accident will not happen immediately due to the fact that the spark concentration biased status discriminating signal is delivered, and as described above, it is a measure of warning that the biased condition of spark-generated positions is in a tendency to appear, so that as the measures or control to lower said machining loads, by carrying out moderate control which does not excessively cut down the machining efficiency of such as the machining speed, for example, slightly increasing the quiescent width between voltage pulses to slightly lower the machining mean current, reducing the no-load voltage of voltage pulses to lower the number of sparking pulses per hour if possible, increasing the travelling speed of the wire electrode , increasing the jetting pressure and flow rate of working fluid, or reducibly controlling the machining feedrate, the machining performance is maintained higher, continuing machining to improve the machining efficiency without causing a breaking accident to the wire electrode.

In the event of an actual concentration or similar condition, or short circuit for some reason or other including such as erroneous and unsuitable settings of various working conditions, by using only said spark concentration foreseeing status discriminating signal SIG 1, it is unavoidable that the wire electrode will break. The third embodiment of the invention, therefore, intends that the limiting condition just before the wire electrode tends to break is to be assessed by one or both of a state of duration times range of said spark concentration foreseeing status discriminating signal SIG 1 and a state of its generation times as a breaking limit, control is to be held so that the wire electrode does not tend to break, even should an accident occur, eg, a jet of working fluid is stopped, by completely not cutting out working conditions, for example, the supply of voltage pulses from the machining pulse power system, but by drastically extending the quiescent width between voltage pulses to strikingly decrease the mean machining current, reducing or causing a machining feed stop, or if required, by carrying out so-called backward control, and further by stopping machining.

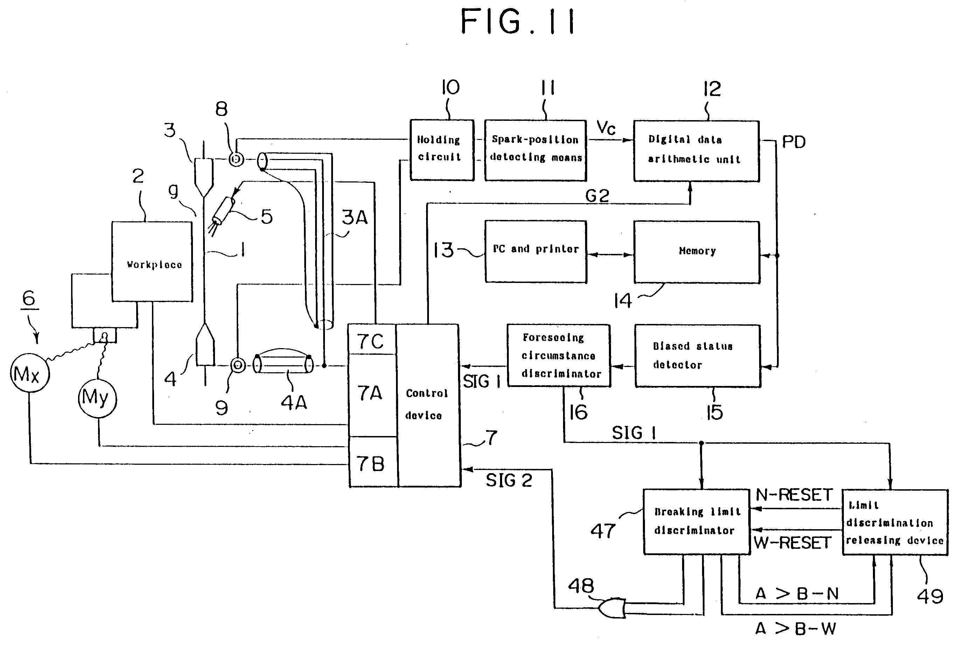

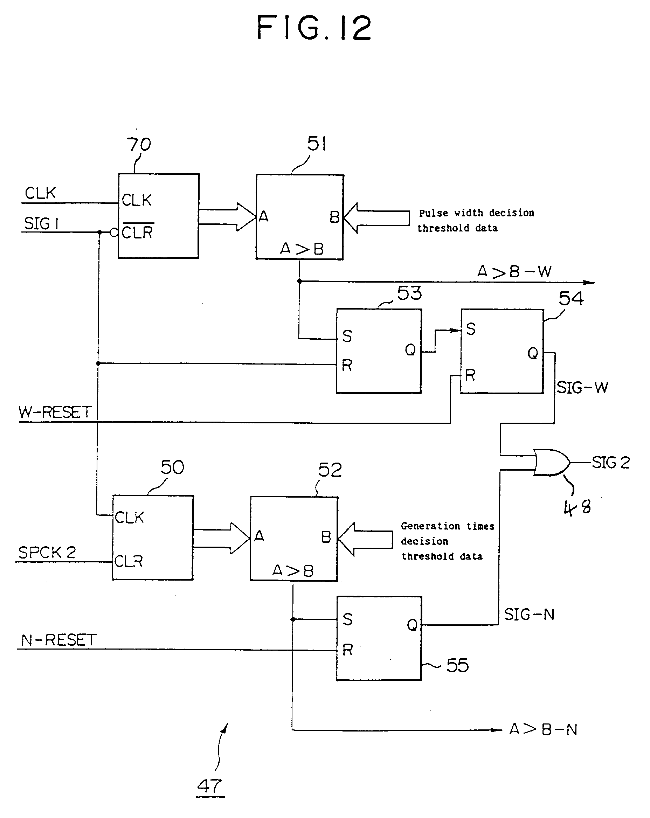

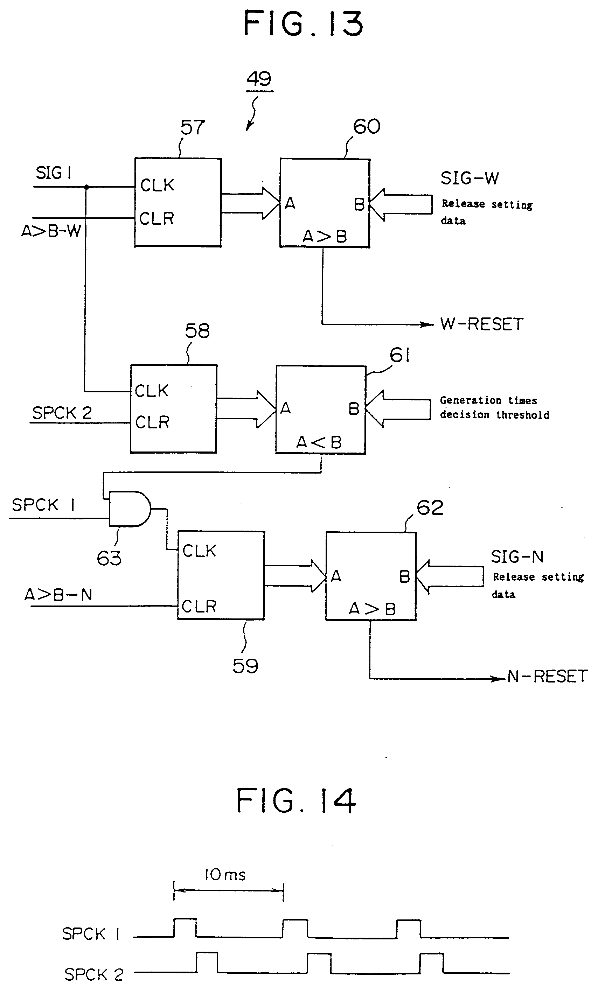

Figure 11 is a block diagram representing a general arrangement of an embodiment, and comprises said Figure 1 modified by parts of the third device; namely, a device 47 (Figure 12) measuring the breaking limit in response to the detection of the state of duration and the state of generation times of the discriminating signal SIG 1 delivered from said spark concentration biased status discriminator 16 and delivering a limit discriminating signal SIG 2 for controlling working conditions to said wire spark machining control device 7, and a releasing device 49 (Figure 13) for breaking limit discrimination detecting said duration and frequency generation conditions of said discriminating signal SIG 1 to carry out the discrimination whether a releasing signal for the limit discriminating signal SIG 1's output from said discriminator 47 is to be delivered or not after said device 47 gives out said limit discriminating signal SIG 2. It is to be noted that 48 is an OR-circuit for delivering said limit signal SIG 2 to the control device 7, even if there is a signal output from either of two signal output terminals of the discriminator 47.

In Figure 12, 70 and 50 are counters; 51 and 52, comparators; 53, 54 and 55, RS flipflops; 56, OR-circuit. In Figure 13, 57, 58 and 59 are counters; 60, 61 and 62, comparators; 63, AND-circuit. On counters in Figure 12 and Figure 13, CLK is a counting terminal, eg, for a 50 kHz clock pulse or counter pulse input; CLR is an input terminal for a signal to reset or clear the count; B is data about various settings or threshold value for measuring or their input terminal; and SPCK 1 and SPCK 2 are sampling pulses cyclically delivered every each required sampling time as shown in Figure 14 (10 ms, in the illustrated example) and SPCK 2 is so set to SPCK 1 that after turning on the later, it is delivered after little delay.

In Figure 12, the upper half is a circuit section in which if each duration of said spark concentration foreseeing status discriminating signal SIG 1 exceeds the desired set limit, the duration limit signal SIG-W is sent from the flipflop 54 to the OR-circuit 56 and then the limit discriminating signal SIG 2 for working conditions control is sent from said OR-circuit 56 to the control device 7. As the threshold data to measure the pulse width of the discriminating signal SIG 1, eg, data corresponding to 1 ms, are entered and located in B of said comparator 51; and when the discriminating signal takes place, as reset the flipflop 54 at the beginning, as described in Figure 10, area II, it releases counter 70's inhibition and resets the flipflop 53. Counter 70 then integrally counts clock pulses of 50 kHz while said discriminating signal SIG 1 is taking place and continuing. With the discriminating signal SIG 1 in Figure 10, area II, the spark dispersion signal OK is delivered in response to the fifth sparking pulse after turning on of said signal, then said discriminating signal SIG 1 goes out, the duration times range of said signal is about 50µs or thereabouts and A<B in the comparator 51, so that said comparator 51 delivers no signal, and in response to the extinction of said signal SIG 1, the counter 70 resets the count and is inhibited so as to not count the clock pulse CLK at once. If the machining condition in the machining gap becomes worse for some cause or other, said discriminating signal SIG 1 often takes place at random and its generation duration time is more liable to prolongation. However, this differs depending on predetermined working conditions, sensitivity and mode of detection control, but when the duration times range of said discriminating signal SIG 1 exceeds the threshold value set in the comparator 51 (about 1 ms in the above, equivalent to when a machining voltage pulse is supplied and impressed to the machining gap by about 100 pulses); that is, the discriminating signal SIG 1 entered in the counter 70 continues without going out and the counter 70 continuously counts the clock pulses CLK for about 50 pulses, the detected incoming data A, in the comparator 51 are in A>B relation with respect to the threshold data B, and said comparator 51 delivers a time length excess signal $\text{A>B-W}$ to set the flipflop 53. Said flipflop 53 sets the next flipflop 54. If machining continues, it delivers the duration limit signal SIG-W meaning that the wire electrode is in a breaking limit condition, and supplies the limit discriminating signal SIG 2 for working condition control to the wire spark machining control device 7 to carry out control operations, eg, a drastic reduction of machining mean current by excessively increasing the quiescent width between voltage pulses, machining feed stop and backward feed, to prevent the wire electrode from breaking and to act so as to promote the recovery of the machining gap to normal machining condition. But then, in addition to the case that the generation duration times range of the discriminating signal SIG 1 exceed a certain level, the breaking accident to the wire electrode may occur highly when the frequency of occurrence of said discriminating signal SIG 1 exceed a certain level, even if no discriminating signal SIG 1 of a long duration times range take place. In Figure 12, the lower half is a circuit section which, if the frequency of occurrence of said spark concentration biased status discriminating signal SIG 1 reaches and exceeds the desired limit within the required set time, delivers the generation times limit signal SIG-N from the flipflop 55 to said OR-circuit 56 and the limit discriminating signal SIG 2 for working conditions control is delivered as does the above; as the threshold data to measure the generation times of the discriminating signal SIG 1, eg, data corresponding to forty times, are entered and located in said comparator 52. It is arranged so that said discriminating signal SIG 1 is entered into the counting terminal CLK of the counter 50 wherein said sampling pulse SPCK 2 enters into the reset terminal CLR; as reset the flipflop 55 at the beginning, accounts the generation times of said discriminating signals SIG 1 during a sampling time (= 10 ms) as long as the sampling pulse SPCK 2 takes place, and enters said counted value into the detected data terminal A to compare with said predetermined data B. According to the above example, during a sampling time of 10 ms; namely, about 1000 machining voltage pulses are supplied and impressed in the machining gap, the discriminating signal SIG 1 is counted forty times or more; that is, when the sparking condition wherein the sparking pulse is continuously in the predetermined biased area by seven pulses or more reached in a condition generating forty times or more, the comparator 52 delivers a generation times excess signal $\text{A>B-N}$. If machining continues, as it is, it delivers the generation times limit signal SIG-N meaning that the wire electrode is in a breaking limit condition, and supplies the limit discriminating signal SIG 2 as does the above.

According to the invention, it is a matter that the breakage to the wire electrode is prevented in such manner as above, and there are various means for machining recovery: when the condition of the machining gap was recovered under control of such as the machining power system 7A and feed drive circuit 7B through the control device 7 in response to said limit discriminating signal SIG 2 and reached in a state wherein machining can be carried out normally, for example, to resume normal machining, detect such condition when the mean voltage across the machining gap went up above 80% of no-load voltage of the voltage pulse, enter a reset pulse into the reset terminal R of said flipflops 54 and 55, extinguish both or either one of said limit signals SIG-W and SIG-N, and then return the working conditions provided such as a modification to the condition, as originally set, under control. Moreover, the apparatus is intended to cause machining recovery after control, as described above, without error, with precision by detecting, and by releasing the controlled condition, and to quickly cause machining recovery by detecting to highly maintain machining efficiency if reaching in a good state. Hereinafter, this is presented according to a releasing device 49 (Figure 13) for said breaking limit discrimination.

In Figure 13, the releasing data for said limiting signal SIG-W, eg, data corresponding to one hundred events, are entered and located in the comparator 60 delivering a reset signal W-Reset to the reset terminal R of the flipflop 54 delivering and holding said duration limit signal SIG-W, while, a counter 57 delivering the detected data is arranged so that said discriminating signal SIG 1 and said time length excess signal $\text{A>B-W}$ are entered into the count input terminal CLK and the reset terminal CLR respectively. When setting the flipflop 53, the output of said excess signal $\text{A>B-W}$ resets the count of the counter 57. The counter 57 counts the discriminating signals SIG 1 until a new excess signal $\text{A>B-W}$ is delivered. When the count of the counter 57 reaches the predetermined releasing data, that is, when the discriminating signals SIG 1 having respective durations shorter than 1 ms are occasionally generated, the comparator 60 delivers the reset signal W-reset. The counter 58 receives the discriminating signal SIG 1 at its terminal CLK and the sampling pulse SPCK 2 at its reset terminal CLR. In the comparator 61, the count data of the counter 58 is entered to its input terminal A and the predetermined threshold data for measuring the generation times, eg, data corresponding to ten times, is entered to its input terminal B. The comparator 61 delivers a gate signal to the AND-circuit 63 when the relationship between the count data A and the predetermined data B is A<B. The AND-circuit 63 delivers an output signal to the count terminal CLK of the counter 59 when both the gate signal of the comparator 61 and the sampling pulse SPCK 1 are received. The counter 59 also receives the generation times excess signal $\text{A>B-N}$ at its reset terminal CLR. In the comparator 62, the count data of the counter 59 is entered to its input terminal A and the releasing data for the limiting signal SIG-N, eg, data corresponding to five times is entered to its input terminal B. The comparator 62 delivers a reset signal N-Reset to the reset terminal R of the flipflop 55.

Therefore, when the counter 58 does not make a count of said discriminating signals SIG 1 only by the number below the data set in the comparator 61 within about 10 ms until the sampling pulse SPCK 2 is delivered after delivering its reset signal to the counter 58, said sampling pulse SPCK 1 enters into the counter 59 through the AND-circuit 63. When such state continues without generating said excess signal $\text{A>B-N}$, the counter 59 can count up, and is a counter to deliver said reset signal N-Reset when the count reached in a machining condition exceeding said releasing data. This circuit means a circuit that to set and to hold said generation times limit signal SIG-N is reset and extinguished when machining condition wherein causes no detection of said excess signal $\text{A>B-N}$ for the desired or a long time in some extent, however, if the detection of said discriminating signal SIG 1 is likely to be overdome than that expected, the AND-circuit 63 blocks or inhibits the incoming of count pulses to delay the output of the reset signal N-Reset, even in the condition wherein no excess signal $\text{A>B-N}$ is detected.

The usefulness and the effect of the wire cut electrical-discharge machining apparatus having a break-preventing means to the wire electrode provided with the above breaking limit discriminator 47 and its releasing device 49 are already apparent as described above.

## Claims

1. A detection system for a wire cut electrical discharge machining apparatus including a renewable wire electrode (1) movable in its axial direction through a working zone in which a workpiece (2) to be machined is adapted to be disposed, said wire electrode being held under tension and during machining in contact with upper and lower electrical feed members, said upper (3) and lower (4) electrical feed members being disposed on opposite sides of the working zone, said workpiece and said wire electrode, during machining, forming a working gap across which machining pulses are impressed in order to produce spark discharges between said wire electrode and said workpiece, said detection system comprising:
current detector means (8,9) arranged to detect a spark current flowing into one or both of said electrical feed members,
a spark position detecting means (11) connected to the current detector means for amplifying the detected current and generating a signal corresponding to a spark discharge position, along the axial direction of the wire electrode between said upper and lower electrical feed members and characterised by; a digital data arithmetic unit (12) connected to the spark position detecting means for converting the output signal therefrom into digital data corresponding to said spark discharge position; and a spark status detector (15) receiving the digital data and responsive thereto for generating a spark discharge bias signal when the digital data output by said digital data arithmetic unit is within a bias range established by an upper limit value and a lower limit value and for delivering a spark position dispersion signal when the digital data output by the digital data arithmetic unit is outside the bias range and for resetting the upper and lower limit values for a new spark discharge position bias range based on a detected spark discharge position.

2. A detection system according to Claim 1, wherein said current detector means comprises upper and lower current detectors (8,9) associated with the upper and lower electrical feed members respectively, the system further comprising upper and lower peak holding circuits (17,18) for detecting and holding the peak current values detected by the upper and lower current detectors, a spark position detecting means (11) comprising a difference amplifier (27) for extracting the difference between the peak current values held by the upper and lower peak holding circuits to thereby output a signal corresponding to a spark discharge position; means (12) for generating a signal to reset said spark position detecting means; a power supply circuit having a switching means responsive to a gating pulse (G1) means responsive to the gating pulse for generating a timing signal (A/D CLK) having a start time generally coincident with the termination of the gating pulse, the digital data arithmetic unit receiving the timing signal as an input, whereby a spark discharge position signal is output for each spark discharge.

3. A detection system according to Claim 2, wherein the output of the difference amplifier is input to the digital data arithmetic unit to convert the digital data into a signal representative of the spark discharge position, and wherein the difference amplifier has a variable amplification factor which varies inversely with respect to predetermined machining parameters.

4. A detection system as claimed in any of the preceding claims, comprising respective adder and subtractor means (35,36) for respectively adding and subtracting digital data to digital data representative of the upper limit value and lower limit value to thereby establish a new bias range, means for generating a first logic signal when the digital data for a spark discharge position is within the bias range and for generating a second logic signal when the digital data for a spark position is outside of the bias range, and means, responsive to the first and second logic signals, for resetting the upper and lower limit values accordingly.

5. A detection system as claimed in Claim 4, further comprising a broken wire electrode discriminator (16), responsive to the first and second logic signals, the discriminator comprising a counter for counting the number of said first logic signals and a comparator for comparing the count with an adjustable, preselected value and outputting a first control signal (SIG 1) whenever said count value exceeds the adjustable, preselected value.

6. A detection system as claimed in Claim 5, further comprising a break limit discriminator, responsive to the first control signal (SIG 1) for generating a second control signal (SIG 2) indicative of conditions wherein the wire electrode is likely to break, the break limit discriminator being further responsive to the duration of the first control signal (SIG 1) and including means for detecting the duration time of the control signal and for generating a time limit signal (SIG-W) whenever the duration time exceeds a set limit, wherein, upon the generation of the time limit signal (SIG-W), the second control signal (SIG 2) is output to a control system for controlling the electrical discharge machining apparatus to prevent breakage of the wire electrode.

7. A detection system as claimed in Claim 6, wherein the break limit discriminator further comprises means, responsive to the control signal (SIG 1) for generating a frequency of occurrence signal (SIG-N) whenever the frequency of occurrence of the control signal exceeds a set frequency, such that upon generation of the frequency of occurrence signal (SIG-N), the second control signal (SIG 2) is output to a control system for controlling the electric discharge machining apparatus to prevent breakage of the wire electrode.

8. A detection system as claimed in Claim 7, further comprising means for generating a release signal (N-RESET) for turning off the frequency of occurrence signal (SIG-N) when machining conditions no longer indicate imminent wire breakage.

9. A detection system as claimed in Claim 8, wherein the means for generating the release signal (N-RESET) comprises means for generating a signal ($\text{A>B-N}$) indicative of an excess frequency of generation of said control signal (SIG 1) and for generating the release signal (N-RESET) when no excess frequency of generation signal is present for a preset time.

## Patentansprüche

1. Erfassungssystem für eine Vorrichtung zur funkenerosiven Bearbeitung mittels Drahtelektrode, wobei die Vorrichtung eine erneuerbare Drahtelektrode (1) enthält, die in ihrer Axialrichtung durch einen Arbeitsbereich bewegbar ist, in dem ein zu bearbeitendes Werkstück (2) angeordnet werden kann, die Drahtelektrode (1) ist unter Spannung gehalten und steht während der Bearbeitung in Kontakt mit oberen und unteren Einspeiseteilen, das obere und das untere Einspeiseteil (3, 4) sind an gegenüberliegenden Seiten des Arbeitsbereichs angeordnet, das Werkstück und die Drahtelektrode bilden während der Bearbeitung einen Bearbeitungsspalt, über den Bearbeitungspulse zum Erzeugen von Funkenentladungen zwischen der Drahtelektrode und dem Werkstück eingebracht werden, das Erfassungssystem enthält Stromerfassungsmittel (8, 9), die zum Erfassen eines in eines der beiden elektrischen Einspeiseteile strömenden Funkenstroms angeordnet sind und Funkenpositionserfassungsmittel (11) enthält, die mit den Stromerfassungsmitteln verbunden sind, zum Verstärken des erfaßten Stroms und zum Erzeugen eines Signals entsprechend einer Funkenentladungsposition entlang der Axialrichtung der Drahtelektrode zwischen dem oberen und dem unteren elektrischen Einspeiseteil,
gekennzeichnet durch
eine digitale Datenarithmetikeinheit (12), die mit den Funkenpositionserfassungsmitteln verbunden ist, zum Umwandeln des Ausgangssignals derselben in digitale Daten entsprechend der Funkenentladungsposition und einen Funkenstatussensor (15), der die digitalen Daten empfängt und darauf reagiert, zum Erzeugen eines Funkenentladungs-Biassignals, wenn der Digitaldatenausgang der Digitaldatenarithmetikeinheit innerhalb einem Biasbereich liegt, der durch einen oberen und einen unteren Grenzwert gebildet wird und zum Zuführen eines Funkenpositionsstreusignals, wenn der Digitaldatenausgang der Digitaldatenarithmetikeinheit außerhalb dem Biasbereich liegt und zum Zurücksetzen des oberen und des unteren Grenzwerts für einen neuen Funkenentladungspositions-Biasbereich basierend auf einer erfaßten Funkenentladungsposition.

2. Erfassungssystem nach Anspruch 1, wobei die Stromerfassungsmittel einen oberen und einen unteren Stromsensor (8, 9) enthalten, die mit den oberen und unteren elektrischen Einspeiseteilen entsprechend verbunden sind, das System enthält ferner obere und untere Spitzenwerthalteschaltungen (17, 18) zum Erfassen und Halten der Spitzenstromwerte` die durch die oberen und unteren Stromsensoren erfaßt werden und Funkenpositionserfassungsmittel (11), die einen Differenzverstärker (27) enthalten, zum Extrahieren der Differenz zwischen den Spitzenstromwerten erhalten durch die oberen und unteren Spitzenwerthalteschaltungen zum Ausgeben eines Signals entsprechend einer Funkenentladungsposition; Mittel (12) vorgesehen sind, zum Erzeugen eines Signals zum Zurücksetzen der Funkenpositionserfassungsmittel; und eine Leistungszufuhrschaltung vorgesehen ist, mit Schaltmitteln, die auf Torsteuerungspulsmittel (G1) reagieren, welche auf den Torsteuerungspuls zum Erzeugen eines Zeitsignals (A/D-CLK) reagieren, der eine Startzeit aufweist, welcher im großen und ganzen mit dem Ende des Torsteuerungspuls übereinstimmt, wobei die Digitaldatenarithmetikeinheit das Zeitsignal als Eingang empfängt, wodurch ein Funkenentladungspositionssignal für jede Funkenentladung ausgegeben wird.

3. Erfassungssystem nach Anspruch 2, wobei der Ausgang des Differenzverstärkers der Digitaldatenarithmetikeinheit zugeführt wird, zum Umwandeln des Digitalsignals in ein die Funkenentladungsposition darstellendes Signal und wobei der Differenzverstärker einen variablen Verstärkungsfaktor aufweist, der invers bezüglich vorbestimmten Bearbeitungsparametern variiert.

4. Erfassungssystem nach irgendeinem der vorangehenden Ansprüche, mit entsprechenden Addier- und Subtrahiermitteln (35, 36) zum entsprechenden Addieren und Subtrahieren von Digitaldaten zu bzw. von Digitaldaten, die den oberen und den unteren Grenzwert darstellen, zum Einrichten eines neuen Biasbereichs, weiterhin mit Mitteln zum Erzeugen eines ersten Logiksinals, wenn die Digitaldaten für eine Funkenentladungsposition innerhalb des Biasbereichs liegen und zum Erzeugen eines zweiten Logiksignals, wenn die Digitaldaten für eine Funkenposition außerhalb des Biasbereichs liegen und weiterhin mit auf die ersten und zweiten Logiksignale reagierenden Mitteln, zum entsprechenden Zurücksetzen der oberen und unteren Grenzwerte.

5. Erfassungssystem nach Anspruch 4, mit einer Unterscheidungseinrichtung (16) für eine gebrochene Elektrode, die auf die ersten und zweiten Logiksignale reagiert, wobei die Unterscheidungseinrichtung einen Fehler zum Zählen der Anzahl der ersten Logiksignale und einen Vergleicher zum Vergleichen des Zählerstands mit einem einstellbaren, vorausgewählten Wert enthält und ein erstes Steuersignal (SIG 1) ausgibt, wann immer der Zählwert den einstellbaren, vorausgewählten Wert überschreitet.

6. Erfassungssystem nach Anspruch 5, mit einer Unterscheidungseinrichtung für eine Bruchgrenze, die auf das erste Steuersignal (SIG 1) zum Erzeugen eines zweiten Steuersignals (SIG 2) reagiert, das die Bedingungen angibt, bei denen die Drahtelektrode wahrscheinlich bricht, wobei die Unterscheidungseinrichtung zum Angeben der Bruchgrenze ferner auf die Dauer des ersten Steuersignals (SIG 1) reagiert und Mittel zum Erfassen der Dauer des Steuersignals und zum Erzeugen eines Zeitgrenzsignals (SIG-W) enthält, wann immer die Zeitdauer eine gesetzte Grenze überschreitet, wobei bei der Erzeugung des Zeitgrenzsignals (SIG-W) das zweite Steuersignal (SIG 2) zu einem Steuersystem ausgegeben wird, zum Steuern der Vorrichtung zur funkenerosiven Bearbeitung für ein Verhindern des Brechens der Drahtelektrode.

7. Erfassungssystem nach Anspruch 6, wobei die Unterscheidungseinrichtung für die Bruchgrenze ferner Mittel enthält, die auf das Steuersignal (SIG 1) zum Erzeugen eines Frequenzereignissignals (SIG-N) reagieren, wann immer die Ereignisfrequenz des Steuersignals eine gesetzte Frequenz überschreitet, so daß bei Erzeugung des Frequenzereignissignals (SIG-N) das zweite Steuersignal (SIG-2) zu einem Steuersystem ausgegeben wird, zum Steuern der Funkenerosionsmaschine, so daß ein Brechen der Drahtelektrode verhindert wird.

8. Erfassungssystem nach Anspruch 7, mit Mitteln zum Erzeugen eines Freigabesignals (N-RESET) zum Abschalten des Frequenzereignissignals (SIG-N), wenn die Bearbeitungsbedingungen nicht länger einen bevorstehenden Drahtbruch angeben.

9. Erfassungssystem nach Anspruch 8, wobei die Mittel zum Erzeugen des Freigabesignals (N-RESET) Mittel enthalten, zum Erzeugen eines Signals ($\text{A>B-N}$), das eine Überschreitungsfrequenz der Erzeugung des Steuersignals (SIG-1) angibt und das Freigabesignal (N-RESET) erzeugt, wenn keine Überschreitungsfrequenz des Erzeugungssignals für eine vorbestimmte Zeit vorhanden ist.

## Revendications

1. Un système de détection pour un appareil d'usinage par décharge électrique à coupe par fil comprenant un fil-électrode remplaçable (1) déplaçable dans son sens axial dans une zone de travail où une pièce (2) à usiner est adaptée pour être disposée, le fil-électrode étant maintenu sous tension et pendant l'usinage en contact avec des éléments d'alimentation électriques supérieur et inférieur, les éléments d'alimentation électrique supérieur (3) et inférieur (4) étant disposés de part et d'autre de la zone de travail, la pièce et le fil-électrode, pendant l'usinage, formant un écartement de travail dans lequel des impulsions d'usinage sont appliquées pour produire des décharges par étincelles entre le fil-électrode et la pièce, ledit système de détection comprenant :
un moyen détecteur de courant (8,9) prévu pour détecter une intensité d'étincelle passant dans un des éléments d'alimentation électrique ou les deux,
un moyen de détection de position d'étincelles (11) connecté au moyen détecteur de courant pour amplifier l'intensité détectée et générer un signal correspondant à une position de décharge par étincelles, le long du sens axial du fil-électrode entre les éléments d'alimentation électrique supérieur et inférieur, caractérisé par une unité de calcul de données numériques (12) connectée au moyen de détection de position d'étincelles pour convertir le signal de sortie de celui-ci en données numériques correspondant à ladite position de décharge par étincelles ; et un détecteur d'état d'étincelage (15) recevant les données numériques et réagissant à celles-ci pour générer un signal de polarisation de décharge par étincelles lorsque les données numériques fournies par l'unité de calcul de données numériques se situent dans une gamme de polarisation établie par une valeur limite supérieure et une valeur limite inférieure, pour émettre un signal de dispersion de positions d'étincelles lorsque les données numériques fournies par l'unité de calcul de données numériques sortent de la gamme de polarisation et pour actualiser les valeurs limites supérieure et inférieure en fonction d'une nouvelle gamme de polarisation de positions de décharge par étincelles sur la base d'une position de décharge par étincelles détectée.

2. Un système de détection selon la Revendication 1, dans lequel le moyen détecteur de courant comprend des détecteurs de courant supérieur et inférieur (8,9) respectivement associés aux éléments d'alimentation électrique supérieur et inférieur, le système comprenant également des circuits de blocage des crêtes supérieure et inférieure (17,18) pour détecter et bloquer les valeurs de courant de crête détectées par les détecteurs de courant supérieur et inférieur, un moyen de détection de positions d'étincelles (11) comprenant un amplificateur de différence (27) pour extraire la différence entre les valeurs de courant de crête bloquées par les circuits de blocage des crêtes supérieure et inférieure afin de émettre un signal correspondant à une position de décharge d'étincelles ; un moyen (12) pour générer un signal de remise à zéro du moyen de détection de positions d'étincelles ; un circuit d'alimentation doté d'un moyen de commutation réagissant à une impulsion de déclenchement (G1) réagissant à l'impulsion de déclenchement pour générer un signal de synchronisation (A/D CLK) ayant un temps d'accélération qui coïncide généralement avec la fin de l'impulsion de déclenchement, l'unité de calcul numérique recevant le signal de synchronisation sous forme d'entrée, un signal de position de décharge par étincelles étant émis pour chaque décharge par étincelles.

3. Un système de détection selon la Revendication 2, dans lequel la sortie de l'amplificateur de différence est entrée dans l'unité de calcul de données numériques pour que les données numériques soient converties en un signal représentatif de la position de décharge par étincelles, et dans lequel l'amplificateur de différence a un coefficient d'amplification variable qui varie en raison inverse des paramètres d'usinage prédéterminés.

4. Un système de détection selon l'une ou l'autre des revendications qui précèdent, comprenant des moyens d'addition et de soustraction (35, 36), lesquels additionnent et soustraient respectivement les données numériques aux/des données numériques représentatives de la valeur limite supérieure et de la valeur limite inférieure pour établir une nouvelle gamme de polarisation, un moyen pour générer un premier signal logique lorsque les données numériques correspondant à une position de décharge par étincelles se si tuent dans la gamme de polarisation et pour générer un second signal logique lorsque les données numériques correspondant à une position de décharge par étincelles sortent de la gamme de polarisation, et un moyen, réagissant aux premier et second signaux logiques, pour redéfinir respectivement les valeurs limites supérieure et inférieure.

5. Un système de détection selon la Revendication 4, comprenant également un discriminateur de fil-électrode cassé (16) réagissant aux premier et second signaux logiques, le discriminateur comprenant un compteur pour compter le nombre de ces premiers signaux logiques et un comparateur pour comparer le compte à une valeur présélectionnée réglable et émettre un premier signal de commande (SIG 1) chaque fois que ce compte dépasse la valeur présélectionnée réglable.

6. Un système de détection selon la Revendication 5, comprenant également un discriminateur de limite de rupture réagissant au premier signal de commande (SIG 1) pour générer un second signal de commande (SIG 2) qui indique les conditions dans lesquelles le fil-électrode est susceptible de casser, le discriminateur de limite de rupture réagissant également à la durée du premier signal de commande (SIG 1) et comprenant un moyen de détecter la durée du signal de commande et de générer un signal de limite de temps (SIG-W) chaque fois que la durée dépasse une limite de consigne, dans lequel, au moment de la génération du signal de limite de temps (SIG-W), le second signal de commande (SIG 2) est envoyé à un système de commande pour commander l'appareil d'usinage par décharge électrique afin d'éviter la rupture du fil-électrode.

7. Un système de détection selon la Revendication 6, dans lequel le discriminateur de limite de rupture comprend également un moyen, réagissant au signal de commande (SIG 1) pour générer un signal de fréquence d'apparition (SIG-N) chaque fois que la fréquence d'apparition du signal de commande dépasse une fréquence établie, de sorte que lors de la génération du signal de fréquence d'apparition (SIG-N), le second signal de commande (SIG 2) soit envoyé à un système de commande pour commander l'appareil d'usinage par décharge électrique afin d'éviter la rupture du fil-électrode.

8. Un système de détection selon la Revendication 7, comprenant également un moyen de génération d'un signal de relâchement (N-RESET) pour mettre hors fonction le signal de fréquence d'apparition (SIG-N) lorsque les conditions d'usinage n'indiquent plus de rupture imminente du fil.

9. Un système de détection selon la Revendication 8, dans lequel le moyen de génération du signal de relâchement (N-RESET) comprend un moyen de générer un signal ($\text{A>B-N}$) indiquant une fréquence excessive de génération de ce signal de commande (SIG 1) et de générer le signal de relâchement (N-RESET) lorsqu'aucune fréquence excessive de génération de signal n'est présente pendant un temps prédéterminé.
